# DEMANDE DE BREVET EUROPEEN

(11) **EP 4 725 764 A1**
(43) Date de publication de la demande: **15.04.2026**
(21) Numéro de dépôt: 25207014.9
(22) Date de dépôt: 06.10.2025
(51) Int. Cl.: B60Q 1/04, B60R 19/50

(54) **VÉHICULE COMPRENANT UN MODULE DE SUPPORT DE PHARES MUNI D'UN RÉCEPTACLE DE PHARE AVANT GAUCHE ET D'UN RÉCEPTACLE DE PHARE AVANT DROIT ET PROCÉDÉ D'ASSEMBLAGE D'UN VÉHICULE**

(30) Priorité: 09.10.2024 FR 2410919
(71) Demandeur: Renault s.a.s, 92100 Boulogne Billancourt (FR)
(72) Inventeur: JAYAKUMAR, Hariharan, Kancheepuram- 6 Kancheepuram (IN)

(57) **Abrégé**

L'invention concerne un véhicule (1) comprenant un module de support de phares (10) fixé au pare-chocs avant (2) du véhicule (1).

Une portion centrale (12) du module de support de phares (10) comporte :
- une pluralité de fixations inférieures (40) et fixant la portion centrale (12) au pare-chocs avant (2) ; et
- une pluralité d'ergots de positionnement (62), chaque ergot de positionnement (62) étant inséré dans un logement de positionnement (86) de façon à bloquer le module de support de phares (10) en translation suivant la direction verticale Z et suivant une direction transversale Y du véhicule (1) tout en autorisant un déplacement en translation de la portion centrale (12) vers l'arrière du véhicule (1) suivant une direction longitudinale X du véhicule (1).

Le véhicule (1) assure une protection satisfaisante à un piéton en cas de collision de jambe.

## Description

### Domaine technique

La présente invention concerne un véhicule comprenant un module de support de phares.

### Arrière-plan technologique

Un véhicule comprend généralement un phare avant gauche et un phare avant droit, espacés l'un de l'autre suivant une direction transversale du véhicule. Habituellement, du point de vue d'une personne qui regarde l'avant du véhicule, le phare avant gauche et le phare avant droit sont totalement séparés l'un de l'autre par la calandre du véhicule. Pour des raisons esthétiques, on peut souhaiter à l'inverse supprimer la calandre, afin que le phare avant gauche et le phare avant droit donnent l'impression de faire partie d'un unique module qui va du phare avant gauche au phare avant droit en passant par l'emplacement où serait habituellement la calandre. Une telle configuration est notamment envisageable pour les véhicules électriques, qui ne nécessitent pas de calandre. Cependant, l'avant du véhicule doit non seulement être visuellement attrayant, mais aussi répondre aux exigences de sécurité relatives aux chocs avec les piétons. Notamment, l'avant du véhicule doit assurer une protection suffisante à un piéton en cas de collision de jambe (« leg impact » en anglais). En Europe, la sécurité en cas de collision de jambe est évaluée par l'organisme Euro NCAP à une vitesse d'impact frontal de 40 km/h, en distinguant les collisions de bas de jambe (« lower leg impact » en anglais) et les collisions de haut de jambe (« upper leg impact » en anglais).

### Résumé de l'invention

Un véhicule selon l'invention assure une protection satisfaisante à un piéton en cas de collision de jambe.

L'invention a pour objet un véhicule.

Selon l'invention, le véhicule comprend :
- un pare-chocs avant formant une cavité interne qui débouche sur l'avant du véhicule par une ouverture ; et
- un module de support de phares fixé au pare-chocs avant dans la cavité interne, le module de support de phares comportant un réceptacle de phare avant gauche, un réceptacle de phare avant droit, et une portion centrale entre le réceptacle de phare avant gauche et le réceptacle de phare avant droit,
et la portion centrale présente un bord inférieur et un bord supérieur situé plus haut que le bord inférieur suivant une direction verticale Z du véhicule et comporte :
- une pluralité de fixations inférieures espacées le long du bord inférieur et fixant la portion centrale au pare-chocs avant ; et
- une pluralité d'ergots de positionnement espacés le long du bord supérieur, chaque ergot de positionnement étant inséré dans un logement de positionnement de façon à bloquer le module de support de phares en translation suivant la direction verticale Z et suivant une direction transversale Y du véhicule tout en autorisant un déplacement en translation de la portion centrale vers l'arrière du véhicule suivant une direction longitudinale X du véhicule, la direction transversale Y et la direction longitudinale X étant chacune orthogonale à la direction verticale Z.

Avec un véhicule selon l'invention, **il** est possible que le phare avant gauche et le phare avant droit donnent l'impression de faire partie d'un unique module qui va du phare avant gauche au phare avant droit en passant par l'emplacement où serait habituellement la calandre. D'autre part, puisque la coopération des ergots de positionnement avec les logements de positionnement n'empêche pas la portion centrale de se translater vers l'arrière du véhicule suivant la direction longitudinale X, cette translation vers l'arrière empêche que le haut de la portion centrale n'agisse comme une structure fixe et indéformable qui serait une cause de blessures pour le piéton. Le pare-chocs avant et le module de support de phares assurent donc une protection suffisante à un piéton en cas de collision de haut de jambe.

Selon une caractéristique possible de l'invention, une plus grande dimension de la portion centrale est suivant la direction transversale Y du véhicule. De cette manière, les réceptacles de phare avant et donc les phares avant peuvent se retrouver positionnés à leurs positions habituelles suivant la direction transversale Y.

Selon une caractéristique possible de l'invention, la portion centrale est dépourvue d'organes de fixation le long du bord supérieur pour fixer la portion centrale au pare-chocs avant. Dans ce cas, le haut de la portion centrale est alors entièrement libre de se translater vers l'arrière du véhicule en cas de collision de haut de jambe, ce qui assure une protection améliorée au piéton. Selon une caractéristique possible de l'invention, le module de support de phares est monobloc, de sorte que le réceptacle de phare avant gauche, le réceptacle de phare avant droit et la portion centrale sont venus de matière. Le fait que le module de support de phares soit monobloc tend à faciliter le montage du module de support de phares dans le pare-chocs avant, car les réceptacles de phare avant et la portion centrale font partie d'une seule et même pièce qui peut être manipulée comme un tout et n'ont pas à être fixés les uns après les autres. Selon une caractéristique possible de l'invention, les ergots de positionnement sont en saillie vers l'avant du véhicule suivant la direction longitudinale X du véhicule. Ceci tend à faciliter le positionnement du module de support de phares, car une simple translation du module de phares suivant la direction longitudinale X peut suffire pour amener les ergots de positionnement à coopérer avec les logements de positionnement et les logements de maintien.

Selon une caractéristique possible de l'invention, chacune des fixations inférieures comporte un support solidaire de la portion centrale, une platine située en arrière du support suivant la direction longitudinale X du véhicule, et une portion affaiblie reliant le support à la platine, la portion affaiblie étant configurée pour se rompre en réponse à un effort appliqué à la portion centrale vers l'arrière du véhicule suivant la direction longitudinale X du véhicule. L'effort en question peut notamment être dû à une collision de jambe. Dans ce cas, la rupture des portions affaiblies détache le module de support de phares du pare-chocs avant, ce qui empêche que la portion centrale n'agisse comme une structure fixe et indéformable qui serait une cause de blessures pour le piéton. Mais cette rupture ne se produit qu'à une vitesse d'impact frontal suffisamment élevée, ce qui empêche le module de support de phares de se détacher du pare-chocs avant en cas de collision à faible vitesse, comme sur un parking par exemple.

Selon une caractéristique possible de l'invention, la portion centrale comporte en outre une pluralité de clips de maintien espacés le long du bord inférieur, chaque clip de maintien coopérant avec un logement de maintien de façon à bloquer la portion centrale en translation de la portion centrale vers l'arrière du véhicule suivant la direction longitudinale X du véhicule. De tels clips de maintien tendent à faciliter le positionnement du module de support de phares par rapport au pare-chocs avant.

Selon une caractéristique possible de l'invention, chacun des clips de maintien comporte une paire de broches en saillie vers l'avant du véhicule suivant la direction longitudinale X du véhicule et insérées dans un logement de maintien, les broches étant configurées pour se libérer du logement de maintien en réponse à un effort appliqué à la portion centrale vers l'arrière du véhicule suivant la direction longitudinale X du véhicule. Ici aussi, l'effort en question peut notamment être dû à une collision de jambe, et la libération des broches détache le module de support de phares du pare-chocs avant, ce qui empêche que la portion centrale n'agisse comme une structure fixe et indéformable qui serait une cause de blessures pour le piéton. Mais cette rupture ne se produit qu'à une vitesse d'impact frontal suffisamment élevée, ce qui empêche le module de support de phares de se détacher du pare-chocs avant en cas de collision à faible vitesse, comme sur un parking par exemple.

Selon une caractéristique possible de l'invention, le véhicule comprend en outre une pièce cadre, la pièce cadre étant fixée au pare-chocs avant dans la cavité interne entre le module de support de phares et le pare-chocs avant, lesdits logements de positionnement et lesdits logements de maintien étant formés dans la pièce cadre. Ceci tend à faciliter la fabrication du pare-chocs avant car les logements de positionnement et les logements de maintien ne sont pas formés sur le pare-chocs avant, mais sur une pièce distincte du pare-chocs avant et fixée à celui-ci.

Selon une caractéristique possible de l'invention, la pièce cadre comporte une pluralité de zones soudables et est fixée au pare-chocs avant par soudure par ultrasons au niveau desdites zones soudables. Ceci permet de fixer aisément la pièce cadre au pare-chocs avant de sorte que la pièce cadre se retrouve dans la cavité interne entre le module de support de phares et le pare-chocs avant. L'invention a pour autre objet un procédé d'assemblage d'un véhicule.

Selon l'invention, le procédé d'assemblage comprend les étapes suivantes :
- une étape de fixation de la pièce cadre au pare-chocs avant dans la cavité interne par soudure par ultrasons au niveau des zones soudables de la pièce cadre ;
- une étape de positionnement du module de support de phares, cette étape de positionnement comprenant insérer les ergots de positionnement dans les logements de positionnement et le cas échéant insérer les clips de maintien dans les logements de maintien ; et
- une étape de fixation de la portion centrale au pare-chocs avant à l'aide des fixations inférieures.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
[Fig. 1] représente une vue en perspective de l'avant d'un véhicule selon l'invention,
[Fig. 2] représente une vue de face depuis l'avant d'un module de support de phares,
[Fig. 3] représente une vue en perspective depuis l'arrière du module de support de phares,
[Fig. 4] représente une vue en perspective d'une fixation inférieure du module de support de phares,
[Fig. 5] représente une vue en perspective d'un clip de maintien du module de support de phares,
[Fig. 6] représente une vue en perspective d'un ergot de positionnement du module de support de phares,
[Fig. 7] représente une vue en perspective depuis l'arrière d'une pièce cadre destinée à être fixée au pare-chocs avant du véhicule et au module de support de phares,
[Fig. 8] représente une vue en perspective illustrant l'assemblage du module de support de phares à la pièce cadre,
[Fig. 9] représente une vue en coupe d'un pare-chocs avant du véhicule selon l'invention,
[Fig. 10] représente la même vue en coupe, après un impact frontal subi par le pare-chocs avant du véhicule.

### Description de mode(s) de réalisation

Dans les figures, et à moins qu'il n'en soit disposé autrement, les éléments identiques porteront les mêmes signes de référence.

Pour les besoins de la description, on se référera à un repère orthonormé direct XYZ classiquement utilisé en conception automobile, dans lequel l'axe X désigne la direction longitudinale avant-arrière du véhicule, orienté vers l'arrière, l'axe Y désigne la direction transversale et est orienté vers la droite du véhicule, l'axe Z désigne la direction verticale, et est orienté vers le haut. Ce repère XYZ a été représenté sur toutes les figures.

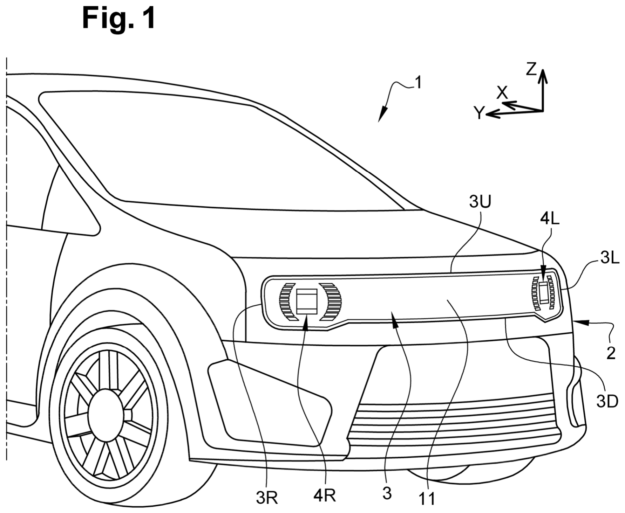

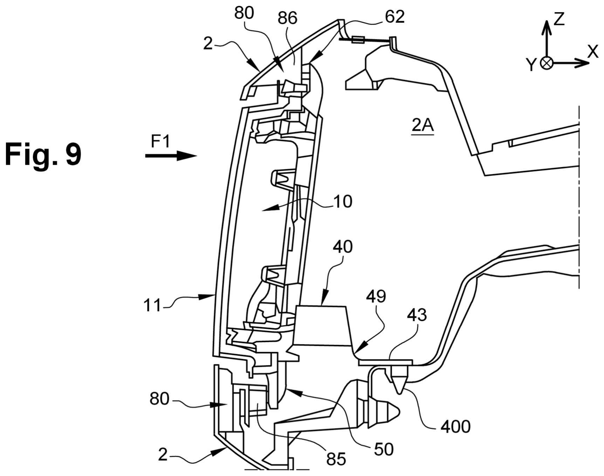

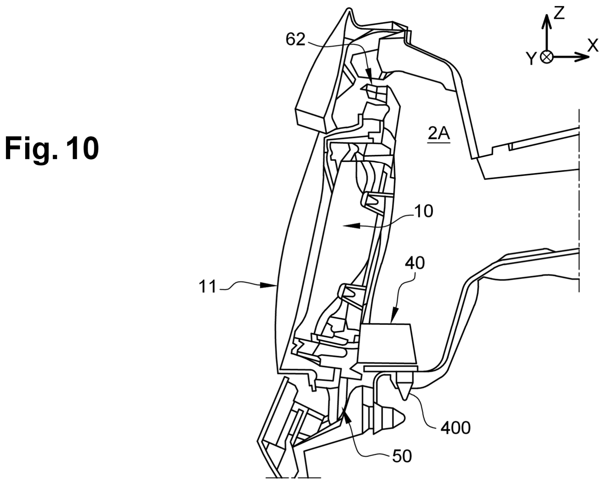

En se référant à la figure 1, l'avant d'un véhicule 1 comprend un pare-chocs avant 2. Le pare-chocs avant 2 comporte une ouverture 3. Une cavité interne 2A formée par le pare-chocs avant 2 (cf. figure 9 et figure 10) débouche sur l'avant du véhicule 1 par cette ouverture 3. Du point de vue d'une personne qui regarde le véhicule 1 depuis l'avant, l'ouverture 3 rend visible le phare avant gauche 4L, le phare avant droit 4R du véhicule 1, et un espace central continu qui va du phare avant gauche 4L au phare avant droit 4R. Pour cela l'ouverture 3 est délimitée par un bord latéral gauche 3L situé à gauche du phare avant gauche 4L, un bord latéral droit 3R situé à droite du phare avant droit 4R, et un bord supérieur 3U et un bord inférieur 3D qui relient chacun le bord latéral gauche 3L et le bord latéral droit 3R.

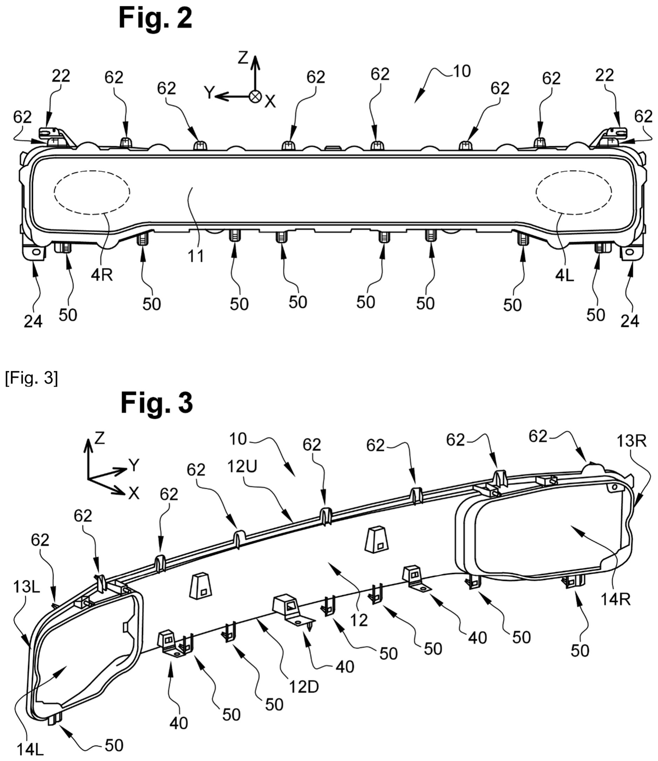

En se référant à la figure 2 et à la figure 3, le véhicule 1 comprend un module de support de phares 10. Le module de support de phares 10 est fixé au pare-chocs avant 2, comme cela sera détaillé ci-après. Le module de support de phares 10 comprend deux réceptacles de phare avant, à savoir un réceptacle de phare avant gauche 13L et un réceptacle de phare avant droit 13R. De façon non représentée, le phare avant gauche 4L est inséré dans une ouverture 14L délimitée par le réceptacle de phare avant gauche 13L, éventuellement en étant fixé au réceptacle de phare avant gauche 13L. De même, le phare avant droit 4R est inséré dans l'ouverture 14R délimitée par le réceptacle de phare avant droit 13R, éventuellement en étant fixé au réceptacle de phare avant droit 13R. En se référant à la figure 1, la figure 2 et la figure 9, une protection transparente 11 (par exemple en polycarbonate) peut être fixée au module de support de phares 10 pour protéger les phares avant 4L, 4R contre les impacts à faible vitesse et contre les particules extérieures tout en laissant les phares avant 4L, 4R visibles depuis l'avant du véhicule 1. La position des phares avant 4L, 4R derrière la protection transparente 11 est indiquée en pointillés sur la figure 2. Entre les réceptacles de phare avant 13L, 13R, le module de support de phares 10 comprend une portion centrale 12. Dans l'exemple représenté, une plus grande dimension de cette portion centrale 12 est suivant la direction transversale Y du véhicule 1, c'est-à-dire que la portion centrale 12 est plus allongée suivant la direction transversale Y que suivant la direction verticale Z (et aussi plus allongée que suivant la direction longitudinale X, bien entendu). De cette manière, les réceptacles de phare avant 13L, 13R et donc les phares avant 4L, 4R peuvent se retrouver positionnés à leurs positions habituelles suivant la direction transversale Y. La portion centrale 12 présente un bord inférieur 12D et un bord supérieur 12U situé plus haut que le bord inférieur 12D suivant la direction verticale Z.

Le module de support de phares 10 est de préférence monobloc, c'est-à-dire que les réceptacles de phare avant 13L, 13R, la portion centrale 12, et les autres parties décrites ci-après du module de support de phares 10 représentent une seule et même pièce. Ainsi, les réceptacles de phare avant 13L, 13R et les autres parties décrites ci-après du module de support de phares 10 sont venus de matière avec, autrement dit formés d'un seul tenant avec, la portion centrale 12.

Le module de support de phares 10 est de préférence obtenu par moulage. Ainsi, les réceptacles de phare avant 13L, 13R, la portion centrale 12, et les autres parties décrites ci-après du module de support de phares 10 sont préférentiellement réalisés dans le même matériau, qui peut par exemple être un polymère.

On décrit maintenant comment le module de support de phares 10 est positionné par rapport au pare-chocs avant 2 et fixé à celui-ci.

En se référant à la figure 2 et à la figure 3, le module de support de phares 10 comporte une pluralité fixations inférieures 40, une pluralité de clips de maintien 50, et une pluralité d'ergots de positionnement 62.

En se référant à la figure 3, les fixations inférieures 40 sont espacées le long du bord inférieur 12D de la portion centrale 12. Bien que la figure 3 représente trois fixations inférieures 40, un nombre différent de fixations inférieures 40 peut être prévu.

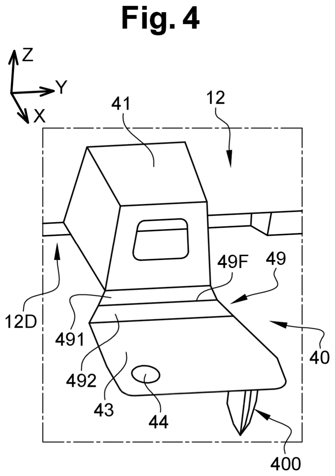

En se référant à la figure 4, chaque fixation inférieure 40 comprend un support 41 solidaire de la portion centrale 12, une platine 43, et une portion affaiblie 49. La platine 43 est située en arrière du support 41 suivant la direction longitudinale X du véhicule, et comporte un ou plusieurs trous traversants 44 (cf. figure 4) recevant chacun un élément de fixation 400 (cf. figure 4, figure 9 et figure 10), tel qu'une vis, pour fixer la portion centrale 12 au pare-chocs avant 2. La portion affaiblie 49 relie le support 41 à la platine 43, et est configurée pour se rompre en réponse à un effort appliqué à la portion centrale 12 vers l'arrière du véhicule 1 suivant la direction longitudinale X. Dans l'exemple représenté, la portion affaiblie 49 consiste en une portion amincie de la fixation inférieure 40 qui comporte deux voiles 491, 492 séparés l'un de l'autre par une ligne de pliure 49F parallèle à la direction transversale Y, de sorte que la portion affaiblie 49 va se rompre le long de cette ligne de pliure 49F. En variante, d'autres constructions sont possibles pour la portion affaiblie 49.

En se référant à la figure 2 et à la figure 3, les clips de maintien 50 sont espacés le long du bord inférieur 12D de la portion centrale 12. Bien que la figure 2 et la figure 3 représentent quatre clips de maintien 50 le long du bord inférieur 12D, un nombre différent de clips de maintien 50 peut être prévu. En outre, un ou plusieurs clips de maintien 50 peuvent aussi être prévus sur chacun des réceptacles 13L, 13R dans le prolongement du bord inférieur 12D, ici à raison de deux clips de maintien 50 par réceptacle 13L, 13R.

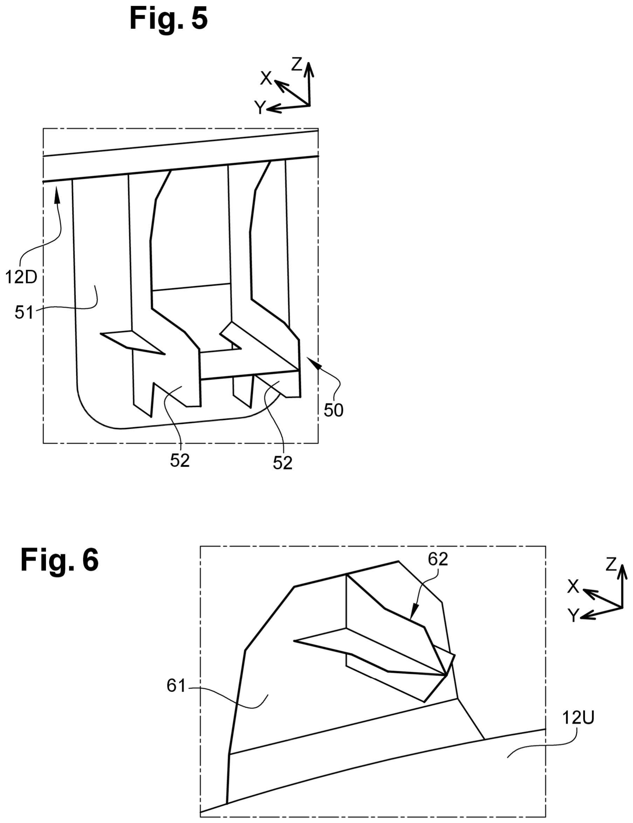

En se référant à la figure 5, chaque clip de maintien 50 comporte deux broches 52 en saillie d'une paroi de support 51. La paroi de support 51 s'étend suivant la direction verticale Z. Les deux broches 52 sont en saillie de la paroi de support 51 vers l'avant du véhicule 1 suivant la direction longitudinale X. Les broches 52 sont déformables élastiquement et sont reçues dans un logement de maintien 85 (cf. figure 9). La déformation élastique des broches 52 à l'occasion de leur insertion dans le logement de maintien 85 bloque la portion centrale 12 en translation vers l'arrière du véhicule 1 suivant la direction longitudinale X. Toutefois les clips de maintien 50 sont configurés de sorte que les broches 52 se libèrent des logements de maintien 85 en réponse à un effort appliqué à la portion centrale 12 vers l'arrière du véhicule 1 suivant la direction longitudinale X. En variante, d'autres constructions sont possibles pour les clips de maintien 50. En se référant à la figure 2 et à la figure 3, les ergots de positionnement 62 sont espacés le long du bord supérieur 12U de la portion centrale 12. Bien que la figure 2 et la figure 3 représentent quatre ergots de positionnement 62 le long du bord supérieur 12U, un nombre différent d'ergots de positionnement 62 peut être prévu. En outre, un ou plusieurs ergots de positionnement 62 peuvent aussi être prévus sur chacun des réceptacles 13L, 13R dans le prolongement du bord supérieur 12U, ici à raison de deux ergots de positionnement 62 par réceptacle 13L, 13R.

En se référant à la figure 6, chaque ergot de positionnement 62 est en saillie d'une paroi de support 61. La paroi de support 61 s'étend suivant la direction verticale Z. L'ergot de positionnement 62 est en saillie de la paroi de support 61 vers l'avant du véhicule 1 suivant la direction longitudinale X. L'ergot de positionnement 62 est reçu dans un logement de positionnement 86 (cf. figure 9), ce qui bloque le module de support de phares 10 en translation suivant la direction verticale Z et suivant une direction transversale Y du véhicule 1 tout en autorisant un déplacement en translation de la portion centrale 12 vers l'arrière du véhicule 1 suivant la direction longitudinale X. Dans l'exemple représenté, les ergots de positionnement 62 sont cruciformes. En variante, d'autres géométries sont possibles pour les ergots de positionnement 62.

En revenant à la figure 2, les réceptacles 13L, 13R sont avantageusement pourvus d'au moins une platine de fixation pour fixer les réceptacles 13L, 13R au pare-chocs avant 2, par exemple au moyen de vis de fixation (non représentées). Dans l'exemple représenté, chaque réceptacle 13L, 13R comporte deux platines de fixation, à savoir une platine de fixation supérieure 22 et une platine de fixation inférieure 24. De cette manière, les réceptacles 13L, 13R peuvent être fermement maintenus en place par rapport au pare-chocs avant 2.

Inversement, pour des raisons qui deviendront apparentes ci-après, il est particulièrement préférable que la portion centrale 12 soit dépourvue d'organes de fixation le long de son bord supérieur 12U pour fixer la portion centrale 12 au pare-chocs avant 2. À cet égard, il faut noter que les ergots de positionnement 62 ne peuvent pas être considérés comme de tels organes de fixation puisqu'ils autorisent un déplacement en translation de la portion centrale 12 vers l'arrière du véhicule 1 suivant la direction longitudinale.

La figure 9 est une vue en coupe du pare-chocs avant 2 orthogonalement à la direction transversale Y et rend ainsi visible la cavité interne 2A formée par le pare-chocs avant 2. Le module de support de phares 10 est positionné par rapport au pare-chocs avant 2 dans la cavité interne 2A par les ergots de positionnement 62, maintenu dans la cavité interne 2A par les clips de maintien 50, et fixé au pare-chocs avant 2 dans la cavité interne 2A via les fixations inférieures 40. Ce positionnement et cette fixation du module de support de phares 10 sont réalisés de telle sorte que, du point de vue d'une personne qui regarde le véhicule 1 depuis l'avant, les phares avant 4L, 4R sont visibles à travers l'ouverture 3 (éventuellement à travers la protection transparente 11) comme on l'a déjà mentionné précédemment.

On a aussi représenté sur la figure 9 la direction d'un impact frontal F1 en cas de collision de jambe, et sur la figure 10 des déformations du pare-chocs avant 2 qui résultent d'un tel impact frontal F1. Comme représenté sur la figure 10, l'impact frontal F1 amène à ce que :
1/ Les ergots de positionnement 62 se libèrent des logements de positionnement 86 vers l'arrière du véhicule 1 suivant la direction longitudinale X, ceci n'étant aucunement empêché par la coopération des ergots de positionnement 62 avec les logements de positionnement 86.
2/ Les broches 52 des clips de maintien 50 se libèrent des logements de maintien 85, ceci ne se produisant que si l'effort appliqué à la portion centrale 12 vers l'arrière du véhicule 1 suivant la direction longitudinale X est suffisamment important. Dans un exemple de réalisation, les broches 52 se libèrent des logements de maintien 85 lorsque cet effort devient supérieur à 70 décanewton (daN).
3/ Les portions affaiblies 49 des fixations inférieures 40 se rompent, de sorte que le module de support de phares 10 (ou à tout le moins la portion centrale 12) est détaché du pare-chocs avant 2, ceci ne se produisant que si l'impact frontal F1 résulte d'une vitesse d'impact frontal suffisamment élevée. Dans un exemple de réalisation, les portions affaiblies 49 se rompent à une vitesse d'impact frontal inférieure ou égale à 40 km/h. Une vitesse d'impact frontal de 40 km/h correspond aux conditions d'évaluation des collisions de jambe par l'organisme Euro NCAP.

Il découle du point 1/ ci-dessus que le pare-chocs avant 2 et le module de support de phares 10 assurent une protection suffisante à un piéton en cas de collision de haut de jambe. En effet, puisque la coopération des ergots de positionnement 62 avec les logements de positionnement 86 n'empêche pas la portion centrale 12 de se translater vers l'arrière du véhicule 1 suivant la direction longitudinale X, cette translation vers l'arrière empêche que le haut de la portion centrale 12 n'agisse comme une structure fixe et indéformable qui serait une cause de blessures pour le piéton. Ceci est tout particulièrement le cas si, comme on l'a mentionné ci-dessus, la portion centrale 12 est dépourvue d'organes de fixation le long de son bord supérieur 12U pour fixer la portion centrale 12 au pare-chocs avant 2. En effet, le haut de la portion centrale 12 est alors entièrement libre de se translater vers l'arrière du véhicule 1 en cas de collision de haut de jambe.

Il découle des points 2/ et 3/ ci-dessus que le pare-chocs avant 2 et le module de support de phares 10 assurent une protection suffisante à un piéton en cas de collision de jambe. En effet, le fait que les broches 52 des clips de maintien 50 se libèrent des logements de maintien 85 et que les portions affaiblies 49 se rompent détache le module de support de phares 10 du pare-chocs avant 2 à une vitesse d'impact frontal de 40 km/h, ce qui empêche que la portion centrale 12 n'agisse comme une structure fixe et indéformable qui serait une cause de blessures pour le piéton. Mais la libération des broches 52 et la rupture des portions affaiblies 49 ne se produisent qu'à une vitesse d'impact frontal suffisamment élevée, ce qui empêche le module de support de phares 10 de se détacher du pare-chocs avant 2 en cas de collision à faible vitesse, comme sur un parking par exemple.

Les logements de maintien 85 et les logements de positionnement 86 peuvent être formés sur le pare-chocs avant 2 lui-même. Toutefois, afin de faciliter la fabrication du pare-chocs avant 2, il est préférable que les logements de maintien 85 et les logements de positionnement 86 soient formés sur une pièce distincte du pare-chocs avant 2 et fixée à celui-ci.

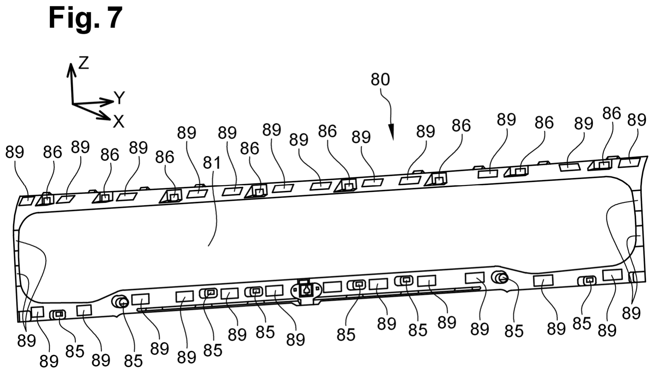

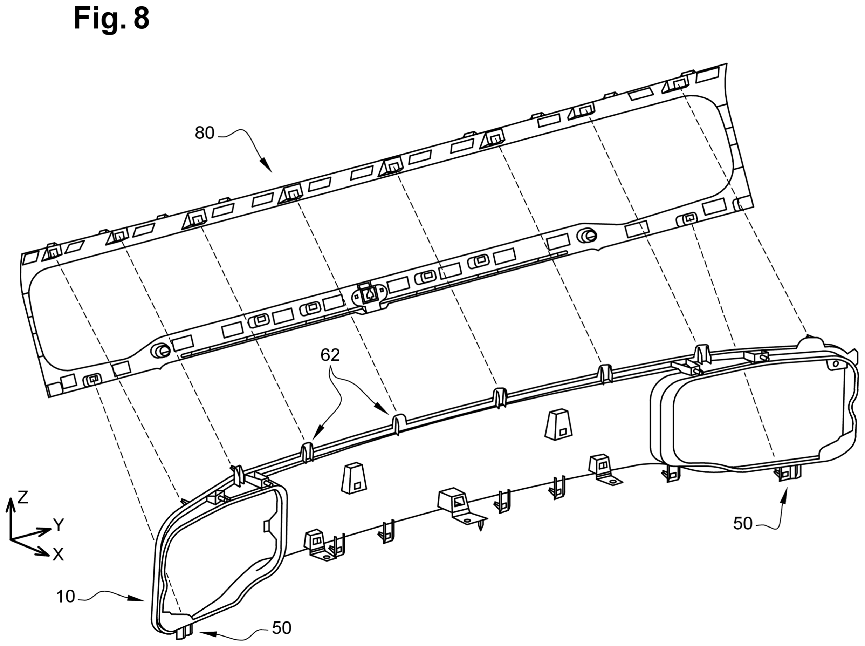

Les figures 7 et 8 illustrent un exemple préféré de réalisation dans lequel cette pièce distincte est une pièce cadre 80 comportant une ouverture centrale 81 de dimensions sensiblement égales à celles de l'ouverture 3. Cette pièce cadre 80, de préférence monobloc, est fixée au pare-chocs avant 2 dans la cavité interne 2A entre le module de support de phares 10 et le pare-chocs avant 2 comme indiqué sur la figure 9. On comprendra de la figure 8 qu'il est particulièrement avantageux que les ergots de positionnement 62 et les broches 52 des clips de maintien 50 soient en saillie vers l'avant du véhicule 1 suivant la direction longitudinale X, car alors une simple translation du module de phares 10 suivant la direction longitudinale X suffit pour amener les ergots de positionnement 62 et les broches 52 à coopérer respectivement avec les logements de positionnement 86 et les logements de maintien 85.

Avantageusement, comme représenté sur la figure 7, la pièce cadre 80 comporte une pluralité de zones soudables 89 pour fixer la pièce cadre 80 au pare-chocs avant 2 par soudure par ultrasons au niveau desdites zones soudables 89.

Un procédé d'assemblage du véhicule 1 à l'aide de cette pièce cadre 80 comprend les étapes suivantes :
- une étape de fixation de la pièce cadre 80 au pare-chocs avant 2 dans la cavité interne 2A par soudure par ultrasons au niveau des zones soudables 89 de la pièce cadre 80 ;
- une étape de positionnement du module de support de phares 10, cette étape de positionnement comprenant insérer les ergots de positionnement 62 dans les logements de positionnement 86 et les broches 52 des clips de maintien 50 dans les logements de maintien 85 ; et
- une étape de fixation de la portion centrale 12 au pare-chocs avant 2 à l'aide des fixations inférieures 40, par exemple à l'aide d'éléments de fixation 400 tels que des vis reçus dans les trous traversants 44.

## Revendications

1. Véhicule (1) comprenant :
- un pare-chocs avant (2) formant une cavité interne (2A) qui débouche sur l'avant du véhicule (1) par une ouverture (3) ; et
- un module de support de phares (10) fixé au pare-chocs avant (2) dans la cavité interne (2A), le module de support de phares (10) comportant un réceptacle de phare avant gauche (13L), un réceptacle de phare avant droit (13R), et une portion centrale (12) entre le réceptacle de phare avant gauche (13L) et le réceptacle de phare avant droit (13R),
dans lequel la portion centrale (12) présente un bord inférieur (12D) et un bord supérieur (12U) situé plus haut que le bord inférieur (12D) suivant une direction verticale Z du véhicule (1) et comporte :
- une pluralité de fixations inférieures (40) espacées le long du bord inférieur (12D) et fixant la portion centrale (12) au pare-chocs avant (2) ; et
- une pluralité d'ergots de positionnement (62) espacés le long du bord supérieur (12U), chaque ergot de positionnement (62) étant inséré dans un logement de positionnement (86) de façon à bloquer le module de support de phares (10) en translation suivant la direction verticale Z et suivant une direction transversale Y du véhicule (1) tout en autorisant un déplacement en translation de la portion centrale (12) vers l'arrière du véhicule (1) suivant une direction longitudinale X du véhicule (1), la direction transversale Y et la direction longitudinale X étant chacune orthogonale à la direction verticale Z.

2. Véhicule (1) selon la revendication 1, dans lequel la portion centrale (12) est dépourvue d'organes de fixation le long du bord supérieur (12U) pour fixer la portion centrale (12) au pare-chocs avant (2).

3. Véhicule (1) selon l'une quelconque des revendications 1 à 2, dans lequel le module de support de phares (10) est monobloc, de sorte que le réceptacle de phare avant gauche (13L), le réceptacle de phare avant droit (13R) et la portion centrale (12) sont venus de matière.

4. Véhicule (1) selon l'une quelconque des revendications 1 à 3, dans lequel les ergots de positionnement (62) sont en saillie vers l'avant du véhicule (1) suivant la direction longitudinale X du véhicule (1).

5. Véhicule (1) selon l'une quelconque des revendications 1 à 4, dans lequel chacune des fixations inférieures (40) comporte un support (41) solidaire de la portion centrale (12), une platine (43) située en arrière du support (41) suivant la direction longitudinale X du véhicule, et une portion affaiblie (49) reliant le support (41) à la platine (43), la portion affaiblie (43) étant configurée pour se rompre en réponse à un effort appliqué à la portion centrale (12) vers l'arrière du véhicule (1) suivant la direction longitudinale X du véhicule.

6. Véhicule (1) selon l'une quelconque des revendications 1 à 5, dans lequel la portion centrale (12) comporte en outre une pluralité de clips de maintien (50) espacés le long du bord inférieur (12D), chaque clip de maintien (50) coopérant avec un logement de maintien (85) de façon à bloquer la portion centrale (12) en translation de la portion centrale (12) vers l'arrière du véhicule (1) suivant la direction longitudinale X du véhicule (1).

7. Véhicule (1) selon la revendication 6, dans lequel chacun des clips de maintien (50) comporte une paire de broches (52) en saillie vers l'avant du véhicule (1) suivant la direction longitudinale X du véhicule (1) et insérées dans un logement de maintien (52), les broches (52) étant configurées pour se libérer du logement de maintien (85) en réponse à un effort appliqué à la portion centrale (12) vers l'arrière du véhicule (1) suivant la direction longitudinale X du véhicule.

8. Véhicule (1) selon l'une quelconque des revendications 6 à 7, dans lequel le véhicule (1) comprend en outre une pièce cadre (80), la pièce cadre (80) étant fixée au pare-chocs avant (2) dans la cavité interne (2A) entre le module de support de phares (10) et le pare-chocs avant (2), lesdits logements de positionnement (86) et lesdits logements de maintien (85) étant formés dans la pièce cadre (80).

9. Véhicule (1) selon la revendication 8, dans lequel la pièce cadre (80) comporte une pluralité de zones soudables (89) et est fixée au pare-chocs avant (2) par soudure par ultrasons au niveau desdites zones soudables (89).

10. Procédé d'assemblage d'un véhicule (1) selon la revendication 9, le procédé d'assemblage étant **caractérisé en ce qu'**il comprend les étapes suivantes :
- une étape de fixation de la pièce cadre (80) au pare-chocs avant (2) dans la cavité interne (2A) par soudure par ultrasons au niveau des zones soudables (89) de la pièce cadre (80) ;
- une étape de positionnement du module de support de phares (10), cette étape de positionnement comprenant insérer les ergots de positionnement (62) dans les logements de positionnement (86) ; et
- une étape de fixation de la portion centrale (12) au pare-chocs avant (2) à l'aide des fixations inférieures (40).
